(19) **Europäisches Patentamt European Patent Office Office européen des brevets**

(11) **EP 4 674 874 A1**

(12) **EUROPEAN PATENT APPLICATION**

(43) Date of publication:
07.01.2026 Bulletin 2026/02

(21) Application number: 24186970.0

(22) Date of filing: 05.07.2024

(51) International Patent Classification (IPC):
***C08F 210/06*** (2006.01) ***B65D 75/32*** (2006.01)
***C08K 5/053*** (2006.01)

(52) Cooperative Patent Classification (CPC):
(C-Sets available)
**C08F 210/06; C08K 5/0083** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Basell Poliolefine Italia S.r.l.**
**20121 Milano (IT)**

(72) Inventors:
• **HEES, Timo**
**65926 Frankfurt/M. (DE)**
• **CAVALIERI, Claudio**
**44122 Ferrara (IT)**
• **BURATTI, Alessandro**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(54) **RANDOM PROPYLENE COPOLYMERS FOR THERMOFORMING APPLICATIONS**

(57) Use of a nucleated propylene 1-butene copolymer for obtaining blisters, wherein the propylene 1-butene copolymer is endowed with the following features:
i) content of 1-butene derived units ranging from 1.5 wt% to 4.5 wt%;

ii) Melt Flow Rate (ISO 1133 230°C/2.16 kg) ranging from 1.5 to 10 g/10min;
iii) an amount of fraction soluble in xylene at 25°C ranging from 1.0 wt% to 4.0 wt%;
iv) content of nucleant ranging from 0.01 wt% to 3.0 wt%.

EP 4 674 874 A1

(52) Cooperative Patent Classification (CPC): (Cont.)

C-Sets
**C08K 5/1575, C08L 23/142;**
C08F 210/06, C08F 210/08, C08F 2500/12,
C08F 2500/33, C08F 2500/34, C08F 2500/31,
C08F 2500/30, C08F 2500/27, C08F 2500/35

**Description**

FIELD OF THE INVENTION

The present disclosure relates is directed to the use of a propylene 1-butene copolymer for the production of blister.

BACKGROUND OF THE INVENTION

Press-through packaging, also known as blister packaging, is product packaging that allows the customer to remove the packaged goods individually from the packaging.

Blister packs are used to pack a wide variety of products. For example, pharmaceutical blister packs are often used to package tablets.

The product is presented in front of a cover film or cover film, which is usually printed with information, and fixed with a molded plastic film part, the so-called bottom film. In the case of some push-through packaging, the cover film is made of plastic film, and in the case of pharmaceuticals it is often made of aluminum foil.

The bottom foil is shaped using thermoforming technology. Thermoforming or hot forming is a process for forming thermoplastics under the influence of heat and with the help of compressed air, vacuum or stamps. Thermoforming is also known as deep drawing.

Blister packs consist of a thermoformed base film and a cover or lid film that can be partially destroyed by pressing and thus opened so that the goods contained in the pack can be removed.

Current solutions have been developed with a focus on their functionality, i.e. they have a barrier function to protect the content and are easy to open to extract the content, and in some cases are provided with additional properties such as anti-counterfeiting features. In order to meet these individual requirements, current technical solutions typically use and combine different materials, e.g. B. different types of plastics, aluminum, adhesives and prints.

While these material combinations are functional and cost effective, they are also problematic as they combine different plastics and metal foils, making waste sorting and recycling difficult or impossible as the components are inextricably linked. These blisters typically end up in incinerators or landfill. There is therefore a need to develop functional blister packs with improved recyclability.

Typical thermoformed bottom sheet materials used in conventional blister packs are a variety of different polymers, eg, polyvinyl chloride, polyvinylidene chloride, polyethylene terephthalate, polyolefins including cycloolefin polymers, fluoropolymers, ethylene vinyl alcohol copolymers, or combinations thereof. However, blister packs made up of a plastic base film and/or an aluminum cover film have the disadvantage that they are difficult to recycle or sensibly dispose of, since both components are inextricably linked.

EP 2586801 relates propylene-butene-1 random copolymer which has a butene-1 content of 1-6 mol%. It describes the use of this kind of cpolymer in large sheet and it is silend about blister.

The applican found that propylene 1-butene copolymer can be advantageously used for the production of blister due to the mechanicla features of the copolymer in particular the very low water vapor transmission rate.

SUMMARY OF THE INVENTION

The present disclosure relates to the use of a nucleated propylene 1-butene copolymer for obtaining blisters, wherein the propylene 1-butene copolymer is endowed with the following features:

i) content of 1-butene derived units ranging from 1.5 wt% to 4.5 wt%; preferably from 2.0 wt% to 4.0 wt% more preferably 2.5 wt% to 3.5 wt%;
ii) Melt Flow Rate (ISO 1133 230°C/2.16 kg) ranging from 1.5 to 10 g/10min; preferably ranging from 2.0 to 9.5 g/10min; more preferably ranging from 2.5 to 9.0 g/10min; even more preferably from 2.0 to 4.0 g/10min;
iii) an amount of fraction soluble in xylene at 25°C ranging from 1.0 wt% to 4.0 wt%; preferably from 1.5 wt% to 3.5 wt% ; more preferably from 1.7 wt% to 2.8 wt%;
iv) content of nucleant ranging from 0.01 wt% to 3.0 wt%; preferably from 0.05 wt% to 2.0 wt%; more preferably from 0.1 wt% to 1.5 wt%.

DETAILED DESCRIPTION OF THE INVENTION

The term "copolymer" as used herein refers to polymers with two different recurring units.

The term "recycled" is used to designate polymer materials deriving from at least one cycle of processing into manufactured articles, as opposed to virgin polymers that is a polymer not subjected at least one cycle of processing into manufactured articles.

The term "consisting essentially of', as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components.

Preferably, the nucleating agent can be a nonitol-based compound, talcum Powder or sodium benzoate ($C_6H_5COONa$). Preferably the nucleating agent comprises 1,2,3-trideoxy-4,6:5,7-bis-O-[(4-propylphenyl)methylene]-nonitol, or a derivative thereof.

Preferably the nucleated propylene 1-butene copolymer of the present disclosure has haze measured on 1 mm plaque according to ASTM D1003-00 ranging from 4.0 % to 10.0 %; preferably rangin from 5.0 % to 9.0 %, mor preferably ranging from 6.0 % to 8.5 %.

Preferably the nucleated propylene 1-butene copolymer of the present disclosure has a charpy impact value measured at 23°C ranging from 2.0 KJ/m2 to 6.0 KJ/m2; preferably from 2.5 KJ/m2 to 5.5 KJ/m2; more preferably from 3.0 KJ/m2 to 5.0 KJ/m2;

Preferably the nucleated propylene 1-butene copolymer of the present disclosure has tensile modulus ranging from 1100 MPa and 1800 MPa;preferably raing from 1250 MPa and 1700 MPa, more preferbaly ranging from 1350 MPa and 1650 MPa.

Preferably the nucleated propylene 1-butene copolymer of the present disclosure has vapour permeability ranging from 2.45 g/m2day90 to 7.52 g/m2day90; preferably from 3.52 g/m2day90 to 6.35 g/m2day90; more preferably from 3.89 g/m2day90 to 5.21 45 g/m2day90.

A further object of the present invention is a process for obtaining blisters comprisign the step of thermoforming the propylene 1-butene above described.

By using the propylene 1-butene copolymer of the present disclosure it is possible to achieve a blister having an high transparence and a very low permeability. Furthermore in view of the materia to be used it is possible to achieve blisters easily reciclable.

EXAMPLES

**Characterization methods**

**Melting temperature and crystallization temperature:**

The melting point has been measured by using a DSC instrument according to ISO 11357-3, at scanning rate of 20C/min both in cooling and heating, on a sample of weight between 5 and 7 mg., under inert N2 flow. Instrument calibration made with Indium.

**Melt Flow Rate:** Determined according to the method ISO 1133-1 (230° C, 2.16 kg).

**Xylene-soluble fraction (XS) at 25°C**

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.)**

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

- Comonomer contents: determined by IR spectroscopy or by NMR (when specified). Particularly for the 1-butene copolymers the amount of comonomers was calculated from $^{13}$C-NMR spectra of the copolymers of the examples.

Measurements were performed on a polymer solution (8-12 wt%) in dideuterated 1,1,2,2-tetrachloro-ethane at 120 °C. The $^{13}$C NMR spectra were acquired on a Bruker AV-600 spectrometer operating at 150.91 MHz in the Fourier transform mode at 120 °C using a 90° pulse, 15 seconds of delay between pulses and CPD (WALTZ16) to remove $^{1}$H-$^{13}$C coupling. About 1500 transients were stored in 32K data points using a spectral window of 60 ppm (0-60 ppm).

- *Copolymer Composition*
- Diad distribution is calculated from $^{13}$C NMR spectra using the following relations:

$$PP = 100 \, I_1 / \Sigma$$

$$PB = 100 \, I_2 / \Sigma$$

$$BB = 100 \, (I_3 - I_{19}) / \Sigma$$

$$PE = 100 \, (I_5 + I_6) / \Sigma$$

$$BE = 100 \, (I_9 + I_{10}) / \Sigma$$

$$EE = 100 \, (0.5(I_{15} + I_6 + I_{10}) + 0.25 \, (I_{14})) / \Sigma$$

$$\Sigma = I_1 + I_2 + I_3 - I_{19} + I_5 + I_6 + I_9 + I_{10} + 0.5(I_{15} + I_6 + I_{10}) + 0.25 \, (I_{14})$$

Where

The molar content is obtained from diads using the following relations:

$$P \, (m\%) = PP + 0.5 \, (PE + PB)$$

$$B \, (m\%) = BB + 0.5 \, (BE + PB)$$

$$E \, (m\%) = EE + 0.5 \, (PE + BE)$$

$I_1, I_2, I_3, I_5, I_6, I_9, I_6, I_{10}, I_{14}, I_{15}, I_{19}$ are integrals of the peaks in the $^{13}$C NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150, (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)).

**Table A.**

| I | Chemical Shift (ppm) | Carbon | Sequence |
|---|---|---|---|
| 1 | 47.34 - 45.60 | $S_{\alpha\alpha}$ | PP |
| 2 | 44.07 - 42.15 | $S_{\alpha\alpha}$ | PB |
| 3 | 40.10 - 39.12 | $S_{\alpha\alpha}$ | BB |
| 4 | 39.59 | $T_{\delta\delta}$ | EBE |
| 5 | 38.66 - 37.66 | $S_{\alpha\gamma}$ | PEP |
| 6 | 37.66 - 37.32 | $S_{\alpha\delta}$ | PEE |
| 7 | 37.24 | $T_{\beta\delta}$ | BBE |
| 8 | 35.22 - 34.85 | $T_{\beta\beta}$ | XBX |
| 9 | 34.85 - 34.49 | $S_{\alpha\gamma}$ | BBE |
| 10 | 34.49 - 34.00 | $S_{\alpha\delta}$ | BEE |

(continued)

| I | Chemical Shift (ppm) | Carbon | Sequence |
|---|---|---|---|
| 11 | 33.17 | $T_{\delta\delta}$ | EPE |
| 12 | 30.91 - 30.82 | $T_{\beta\delta}$ | XPE |
| 13 | 30.78 - 30.62 | $S_{\gamma\gamma}$ | XEEX |
| 14 | 30.52 - 30.14 | $S_{\gamma\delta}$ | XEEE |
| 15 | 29.87 | $S_{\delta\delta}$ | EEE |
| 16 | 28.76 | $T_{\beta\beta}$ | XPX |
| 17 | 28.28 - 27.54 | $2B_2$ | XBX |
| 18 | 27.54 - 26.81 | $S_{\beta\delta} + 2B_2$ | BE, PE, BBE |
| 19 | 26.67 | $2B_2$ | EBE |
| 20 | 24.64 - 24.14 | $S_{\beta\beta}$ | XEX |
| 21 | 21.80 - 19.50 | $CH_3$ | P |
| 22 | 11.01 - 10.79 | $CH_3$ | B |

**Ethylene content in the copolymers**

$^{13}$C NMR spectra were acquired on a Bruker AV-600 spectrometer equipped with cryoprobe, operating at 160.91 MHz in the Fourier transform mode at 120 °C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

$$PPP = 100\ T\beta\beta/S \qquad PPE = 100\ T\beta\delta/S \qquad EPE = 100\ T\delta\delta/S$$

$$PEP = 100\ S\beta\beta/S \qquad PEE = 100\ S\beta\delta/S \qquad EEE = 100\ (0.25\ S\gamma\delta + 0.5\ S\delta\delta)/S$$

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation: E% mol = 100 * [PEP+PEE+EEE]

The weight percentage of ethylene content was evaluated using the following equation:

$$100 * E\% \, mol * MWE$$

$$E\% \, wt. = E\% \, mol * MWE + P\% \, mol * MWP$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1r_2 = 1 + \left( \frac{EEE+PEE}{PEP} + 1 \right) - \left( \frac{P}{E} + 1 \right) \left( \frac{EEE+PEE}{PEP} + 1 \right)^{0.5}$$

The tacticity of Propylene sequences was calculated as mm content from the ratio of the PPP mmT$_{\beta\beta}$ (28.90-29.65 ppm) and the whole T$_{\beta\beta}$ (29.80-28.37 ppm).

## Samples for the mechanical tests

Samples have been obtained according to ISO 1873-2:2007.

**Charpy impact test** is determined according to ISO 179-1eA, and ISO 1873-2

**Elongation at yield:** measured according to ISO 527.

**Elongation at break:** measured according To ISO 527

**Stress at break:** measured according to ISO 527.

## Haze (on 1 mm plaque)

According to the method used, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75x75x1 mm plaques are molded with a GBF Plastiniector G235190 Injection Molding Machine, 90 tons under the following processing conditions:

Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

**Tensile Modulus** according to ISO 527-2.

Example 1

The solid catalyst used in the following examples was prepared according to the Example 10 of the International Patent Application WO 00/63261. Triethylaluminium (TEAL) was used as co-catalyst and dicyclopentyldimethoxysilane as external donor, with the weight ratios indicated in Table 1.

**Polymerization**

The polymerization run is carried out in continuous mode in a series of two reactors equipped with devices to transfer the product from one reactor to the one immediately next to it. The two reactors are liquid phase loop reactors. Propylene is the solvent, hydrogen is used as molecular weight regulator.

The gas phase (propylene, 1-butene and hydrogen) is continuously analyzed via gas-chromatography.

At the end of the run the powder is discharged and dried under a nitrogen flow. The main polymerization conditions and the properties of the polymer are reported in Tables 1 and 2.

Table 1 - Polymerization conditions

|  | Ex 1 |
|---|---|
| TEAL/ext donor (wt ratio) | 19.9 |
| first loop |  |
| Temperature °C | 70 |
| Pressure Kpa | 4000 |
| H$_2$ bulk mol/kmoll | 0.899 |
| 1-butene bulk wt/wt | 0.055 |
| split wt% | 50 |
| secondo loop |  |
| Temperature °C | 70 |
| Pressure Kpa | 4000 |
| H$_2$ bulk mol/kmoll | 0.899 |
| 1-butene bulk wt/wt | 0.055 |
| split wt% | 50 |
|  |  |

The polymer obtained in example 1 has been added 0.1 wt% of NX8000. comparative example 2 is a commercial random propylene ethylene copolymer sold by Lyondellbasell RP320M

table 2

|  | Units | EX 1 | EX 1 nucleated | Comp ex 2 | Comp ex 2 nucelated |
|---|---|---|---|---|---|
| Comonomer contewnt | wt% | 4 | 4 | 3 | 3 |
| Melt Flow Rate | g/10min | 3 | 3 | 7.82 | 8.27 |
| Tm | deg_C | 149.8 | 154.4 | 142.5 | 148.1 |
| Tc | deg_C | 103.8 | 120.2 | 94.9 | 116 |
| Hc | J/g | -102.9 | -89 | -76.4 | -77.6 |
| Hm | J/g | 89.0 | 88.2 | 73.3 | 77.7 |
| Haze (Place 1mm) | % | 43.2 | 6.74 | 49.9 | 7.26 |
| Charpy Impact @ 23°C | KJ/M2 | 4.6 | 3.9 | 5.7 | 6.2 |
| Charpy Impact @ 0°C | KJ/M2 | 1.4 | 1.7 | 1.9 | 1.9 |
| Tensile Modulus | N/MM2 | 1270 | 1580 | 850 | 1070 |
| Permeant RH (g/m2 day) | g/m2day9 0% | 6.5 | 4.06 | 8.89 | 6.21 |
| 90%RH Xylene soluble | % | 2 | 2.1 | 6.2 | 6 |

From table 1 clearly results that the example according to the invention shows a better haze and a better permeability.

**Claims**

1. Use of a nucleated propylene 1-butene copolymer for obtaining blisters, wherein the propylene 1-butene copolymer is endowed with the following features:

   i) content of 1-butene derived units ranging from 1.5 wt% to 4.5 wt%;
   ii) Melt Flow Rate (ISO 1133 230°C/2.16 kg) ranging from 1.5 to 10 g/10min;
   iii) an amount of fraction soluble in xylene at 25°C ranging from 1.0 wt% to 4.0 wt%;
   iv) content of nucleant ranging from 0.01 wt% to 3.0 wt%.

2. Use of a nucleated propylene 1-butene copolymer according to claim 1 wherein in the propylene 1-butene copolymer the content of 1-butene derived units ranges from 2.0 wt% to 4.0 wt%.

3. Use of a nucleated propylene 1-butene copolymer according to claims 1 or 2 wherein the propylene 1-butene copolymer has a Melt Flow Rate (ISO 1133 230°C/2.16 kg) ranging from 2.0 to 9.5 g/10min.

4. Use of a nucleated propylene 1-butene copolymer according to claims 1-3 wherein the propylene 1-butene copolymer has an amount of fraction soluble in xylene at 25°C ranging from 1.5 wt% to 3.5 wt%.

5. Use of a nucleated propylene 1-butene copolymer according to claims 1-4 wherein the content of nucleant ranges from 0.05 wt% to 2.0 wt%.

6. Use of a nucleated propylene 1-butene copolymer according to claims 1-5 wherein the nucleated propylene 1-butene copolymer has the haze measured on 1 mm plaque according to ASTM D1003-00 ranging from 4.0 % to 10.0 %.

7. Use of a nucleated propylene 1-butene copolymer according to claims 1-6 wherein the nucleated propylene 1-butene copolymer has a charpy impact value measured at 23°C ranging from 2.0 KJ/$m^2$ to 6.0 KJ/$m^2$.

8. Use of a nucleated propylene 1-butene copolymer according to claims 1-7 wherein the nucleated propylene 1-butene copolymer has tensile modulus ranging from 1100 MPa and 1800 MPa.

9. Use of a nucleated propylene 1-butene copolymer according to claims 1-8 wherein the nucleated propylene 1-butene copolymer has vapour permeability ranging from 2.45 g/m2day90 to 7.52 g/m2day90.

10. Use of a nucleated propylene 1-butene copolymer according to claims 1-9 wherein in the propylene 1-butene copolymer the content of 1-butene derived units ranges from 2.5 wt% to 3.5 wt.

11. Use of a nucleated propylene 1-butene copolymer according to claims 1-10 wherein the propylene 1-butene copolymer has a Melt Flow Rate (ISO 1133 230°C/2.16 kg) ranging from 2.0 to 4.0 g/10min g/10min.

12. Use of a nucleated propylene 1-butene copolymer according to claims 1-11 wherein the nucleated propylene 1-butene copolymer has the haze measured on 1 mm plaque according to ASTM D1003-00 ranging from 5.0 % to 9.0 %.

13. Use of a nucleated propylene 1-butene copolymer according to claims 1-12 wherein the nucleated propylene 1-butene copolymer has vapour permeability ranging from from 3.52 g/m2day90 to 6.35 g/m2day90;

14. A process for obtaining blisters comnprising the step of thermoforming the propylene 1-butene of claims 1-13.

15. A blister comprising the nucleated propylene 1-butene copolymer of claims 1-13.

## EUROPEAN SEARCH REPORT

**Application Number**

EP 24 18 6970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 234 399 A (CHINA PETROLEUM & CHEMICAL; BEIJING CHEM INST CHINA PET) 9 November 2011 (2011-11-09) * claims 1-3; example 3; table 1 * ----- | 1-12,14, 15 | INV. C08F210/06 B65D75/32 C08K5/053 |
| Y | WO 2010/010007 A1 (BASELL POLIOLEFINE SRL [IT]; LUETKE MICHAEL [DE] ET AL.) 28 January 2010 (2010-01-28) * claims 1, 4, 6, 7; example 2 * ----- | 1-5, 7-11, 13-15 | |
| Y | WO 2023/180368 A1 (BOREALIS AG [AT]) 28 September 2023 (2023-09-28) * claim 1; example IE2 * ----- | 1-5, 7-11, 13-15 | |

**TECHNICAL FIELDS SEARCHED (IPC)**

C08F
B65D
C08K
A61J

The present search report has been drawn up for all claims

| Place of search | Date of completion of the search | Examiner |
|---|---|---|
| Munich | 10 December 2024 | Bernhardt, Max |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 18 6970

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | | Publication date | Patent family member(s) | | Publication date |
|---|---|---|---|---|---|
| CN 102234399 | A | 09-11-2011 | NONE | | |
| WO 2010010007 | A1 | 28-01-2010 | NONE | | |
| WO 2023180368 | A1 | 28-09-2023 | CN | 118891321 A | 01-11-2024 |
| | | | EP | 4249555 A1 | 27-09-2023 |
| | | | WO | 2023180368 A1 | 28-09-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2586801 A

- WO 0063261 A

**Non-patent literature cited in the description**

- **J.C. RANDAL**. *Macromol. Chem Phys.*, 1989, vol. C29, 201
- **M. KAKUGO** ; **Y. NAITO** ; **K. MIZUNUMA** ; **T. MIYATAKE**. *Macromolecules*, 1982, vol. 15, 1150
- **H.N. CHENG**. *Journal of Polymer Science, Polymer Physics Edition*, 1983, vol. 21, 57
- **C.J. CARMAN** ; **R.A. HARRINGTON** ; **C.E. WILKES**. *Macromolecules*, 1977, vol. 10, 536

- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethyl-aluminum chloride. *Macromolecules*, 1982, vol. 15, 1150